# DEMANDE DE BREVET EUROPEEN

(11) **EP 4 011 321 A1**
(43) Date de publication de la demande: **15.06.2022**
(21) Numéro de dépôt: 21213475.3
(22) Date de dépôt: 09.12.2021
(51) Int. Cl.: A61C 7/14, A61C 7/00, B33Y 80/00

(54) **PROCÉDÉ DE FABRICATION D'UN DISPOSITIF DE POSE D'UN APPAREIL ORTHODONTIQUE**

(30) Priorité: 10.12.2020 FR 2013000
(71) Demandeur: 3C, 93150 Le Blanc-Mesnil (FR)
(72) Inventeur: CURIEL, Patrick, 75116 PARIS (FR); ERNENWEIN, Didier, 92420 VAUCRESSON (FR); MELKA, Harry, 75017 PARIS (FR); COUDERC, Paul, 93500 PANTIN (FR)
(74) Mandataire: Lavoix

(57) **Abrégé**

L'invention concerne un procédé de fabrication d'un dispositif (142) de pose d'un appareil orthodontique (112), comportant : les étapes suivantes :
- réalisation d'une première image d'une rangée de dents dans une position initiale ; et d'une deuxième image de l'appareil orthodontique ; ledit appareil comprenant deux éléments d'attache (22) reliés par un pont (24), chaque élément d'attache étant apte à être assemblé à une dent ;
- réalisation d'une troisième image de l'appareil orthodontique assemblé aux dents dans la position initiale ; puis
- réalisation d'une quatrième image du dispositif de pose, comprenant : une surface de contact (54), apte à s'assembler aux dents ; deux premières cavités complémentaires des éléments d'attache ; et une seconde cavité apte à recevoir le pont ; puis
- fabrication additive du dispositif de pose (142) à partir de ladite quatrième image.

## Description

La présente invention concerne un procédé de fabrication d'un dispositif de pose d'un appareil orthodontique, du type comportant les étapes suivantes : réalisation d'une première image numérisée d'une rangée de dents d'un patient dans une première position initiale, ladite rangée de dents comprenant une surface de réception ; puis réalisation, à partir de ladite première image, d'une deuxième image numérisée de l'appareil orthodontique ; ledit appareil orthodontique comprenant au moins deux éléments d'attache et au moins un pont, le ou chaque pont reliant deux éléments d'attache, chaque élément d'attache comprenant une surface d'attache et une surface frontale opposées, chaque surface d'attache étant apte à être assemblée à une zone de réception incluse dans la surface de réception, chaque zone de réception correspondant à une dent distincte de la rangée.

L'invention s'applique particulièrement aux appareils orthodontiques de type lingual, disposés sur la face postérieure non visible des dents. L'invention s'applique également aux appareils orthodontiques de type vestibulaire, disposés sur la face antérieure visible des dents.

Par « appareil orthodontique », on entend un appareil dit actif, apte à exercer sur les dents d'un patient un effort tendant à déplacer lesdites dents de la position initiale, considérée comme insatisfaisante, vers une position souhaitée, correspondant notamment à un alignement des dents ; ou encore un appareil dit inactif, apte à maintenir les dents dans la position initiale, suite à un déplacement antérieur desdites dents.

Plusieurs techniques de fabrication permettant de réaliser un appareil orthodontique à partir d'une image numérisée sont connues. De telles techniques permettent notamment de configurer l'appareil pour que les parties au contact des dents épousent précisément la forme desdites dents. La fabrication d'un tel appareil orthodontique est notamment décrite dans la demande FR3089114 au nom de la Demanderesse.

Cependant, le positionnement précis de l'appareil peut dépasser les capacités d'un praticien. Des erreurs de positionnement minimes, de l'ordre d'une fraction de millimètre, peuvent entraîner des mouvements de dents non souhaités et compromettre l'efficacité du traitement.

Afin de résoudre ce problème, l'invention a pour objet un procédé de fabrication du type précité, comportant en outre les étapes suivantes : réalisation, à partir des première et deuxième images numérisées, d'une troisième image numérisée de l'appareil orthodontique assemblé à la rangée de dents dans la première position initiale, chaque surface d'attache d'un élément d'attache étant assemblée à la zone de réception correspondante de la surface de réception ; puis réalisation, à partir de la troisième image numérisée, d'une quatrième image numérisée d'un dispositif de pose de l'appareil orthodontique, ledit dispositif de pose comprenant : une surface de contact, apte à s'assembler de manière complémentaire à la surface de réception de la rangée de dents ; au moins deux premières cavités débouchant sur la surface de contact, chaque première cavité étant complémentaire d'une surface frontale d'un élément d'attache de l'appareil orthodontique ; et au moins une seconde cavité, la ou chaque seconde cavité étant apte à recevoir un pont de l'appareil orthodontique ; puis fabrication additive du dispositif de pose à partir de ladite quatrième image numérisée, à l'aide d'un matériau solide.

Suivant d'autres aspects avantageux de l'invention, le procédé de fabrication comporte l'une ou plusieurs des caractéristiques suivantes, prises isolément ou suivant toutes les combinaisons techniquement possibles :
- le procédé de fabrication comprend en outre une étape de réalisation d'une cinquième image numérisée de la rangée de dents du patient dans une deuxième position recherchée ; la réalisation de la deuxième image numérisée de l'appareil orthodontique étant effectuée à partir des première et cinquième images numérisées, de sorte que l'appareil orthodontique soit apte à déplacer les dents du patient de la première à la deuxième position ;
- la quatrième image numérisée du dispositif de pose est configurée de sorte que ledit dispositif de pose comprenne une pluralité d'unités d'assemblage, chaque unité d'assemblage étant disposée proche d'une première cavité, chaque unité d'assemblage étant destinée à s'assembler avec un organe de maintien de l'élément d'attache correspondant dans ladite première cavité.

L'invention se rapporte en outre à un dispositif de pose issu d'un procédé de fabrication tel que décrit ci-dessus.

L'invention se rapporte en outre à un procédé de fabrication d'un assemblage de pose, ledit assemblage de pose comprenant un appareil orthodontique et un dispositif de pose assemblés l'un à l'autre de manière réversible, le procédé comprenant les étapes suivantes : fabrication du dispositif de pose par un procédé tel que décrit ci-dessus ; fabrication de l'appareil orthodontique à partir de la deuxième image numérisée ; et assemblage dudit appareil orthodontique au dispositif de pose, la surface frontale de chaque élément d'attache étant reçue dans la première cavité correspondante, chaque pont étant reçu dans la seconde cavité correspondante.

Avantageusement, ledit procédé comprend en outre l'assemblage d'un organe de maintien avec chaque unité d'assemblage du dispositif de pose, ledit organe de maintien étant apte à maintenir un élément d'attache de l'appareil orthodontique dans la première cavité correspondante du dispositif de pose.

L'invention se rapporte en outre à un assemblage de pose issu d'un procédé de fabrication tel que décrit ci-dessus.

Avantageusement, l'appareil orthodontique de l'assemblage de pose est un appareil de type lingual, destiné à être appliqué à l'arrière des dents d'un patient.

Avantageusement, l'appareil orthodontique de l'assemblage de pose est réalisé dans un matériau à mémoire de forme, préférentiellement du nitinol.

L'invention sera mieux comprise à la lecture de la description qui va suivre, donnée uniquement à titre d'exemple non limitatif et faite en se référant aux dessins sur lesquels :
[Fig 1] la figure 1 est une vue de dessus d'une première image numérisée en trois dimensions formant une étape d'un procédé de fabrication selon un mode de réalisation de l'invention ;
[Fig 2] la figure 2 est une de détail, en coupe, de la première image numérisée de la figure 1 ;
[Fig 3] la figure 3 est une vue de dessus d'une deuxième image numérisée en trois dimensions formant une autre étape du procédé de fabrication ;
[Fig 4] la figure 4 est une vue de détail de la deuxième image numérisée de la figure 3 ;
[Fig 5] la figure 5 est une de détail d'un assemblage de pose issu d'un procédé de fabrication selon un mode de réalisation de l'invention ; et
[Fig 6] la figure 6 est un logigramme des étapes d'un procédé de fabrication selon un mode de réalisation de l'invention.

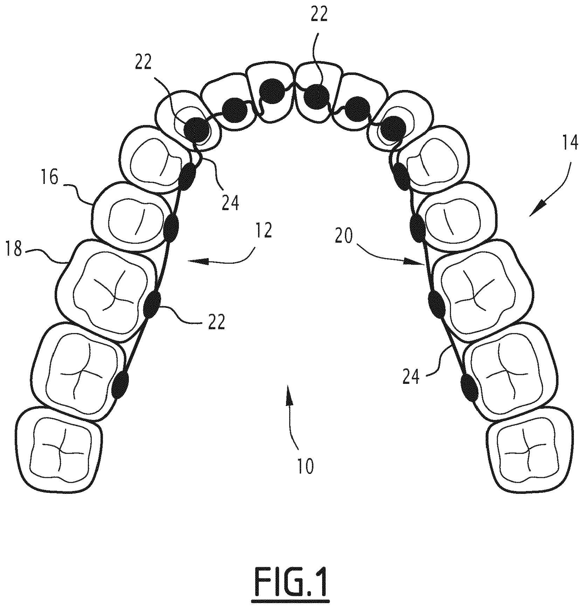

La figure 1 montre une première image numérisée 10 en trois dimensions, représentant un appareil orthodontique 12 assemblé à une rangée 14 de dents 16, 18 d'un patient.

L'appareil orthodontique 12 est configuré pour être assemblé à une surface de réception 20 de la rangée 14 de dents. Dans le mode de réalisation représenté, la surface de réception 20 est sur la face postérieure des dents 16, 18. En d'autres termes, l'appareil orthodontique 12 est un dispositif de type lingual.

En variante non représentée, la surface de réception est sur la face antérieure visible des dents, l'appareil orthodontique étant de type dit vestibulaire.

L'appareil orthodontique 12 comprend une pluralité d'éléments d'attache 22 et une pluralité de ponts 24. Les éléments d'attache 22 et les ponts 24 sont disposés de manière alternée le long de l'appareil orthodontique 12, chaque pont 24 reliant deux éléments d'attache 22 adjacents.

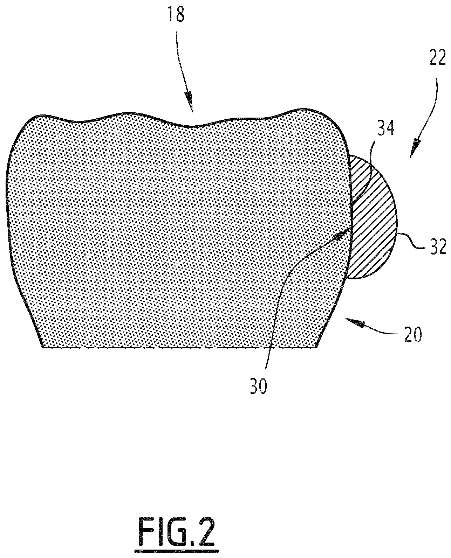

Chaque élément d'attache 22 de l'appareil orthodontique 12 est destiné à être fixé à une dent 16, 18 distincte de la rangée 14. Plus précisément, comme visible sur la figure 2, chaque élément d'attache 22 comprend une surface d'attache 30 et une surface frontale 32, sensiblement opposée l'une à l'autre.

La surface d'attache 30 est destinée à être assemblée à une zone de réception 34, incluse dans la surface de réception 20. Chaque zone de réception 34 associée à une surface d'attache 30 est située sur une dent 16, 18 distincte de la rangée 14.

Plus particulièrement, chaque surface d'attache 30 présente une forme en trois dimensions, complémentaire de la zone de réception 34 associée. Cette forme en trois dimensions est généralement irrégulière, en particulier dans le cas d'un appareil orthodontique 12 de type lingual. En effet, dans ce cas, la zone de réception 34 se trouve à l'arrière des dents.

La surface frontale 32, destinée à être opposée aux dents 16, 18, présente une forme préférentiellement configurée pour le confort du patient. Par exemple, la surface frontale 32 présente une forme lisse et préférentiellement bombée, adaptée au contact avec la langue du patient.

Chaque pont 24 présente une forme allongée entre deux extrémités, chacune desdites extrémités étant au contact d'un élément d'attache 22.

Dans la première image numérisée 10, les ponts 24 sont dimensionnés pour correspondre à des éléments déformables, notamment flexibles, comme il sera explicité par la suite. Les ponts 24 présentent notamment une épaisseur inférieure à celle des éléments d'attache 22.

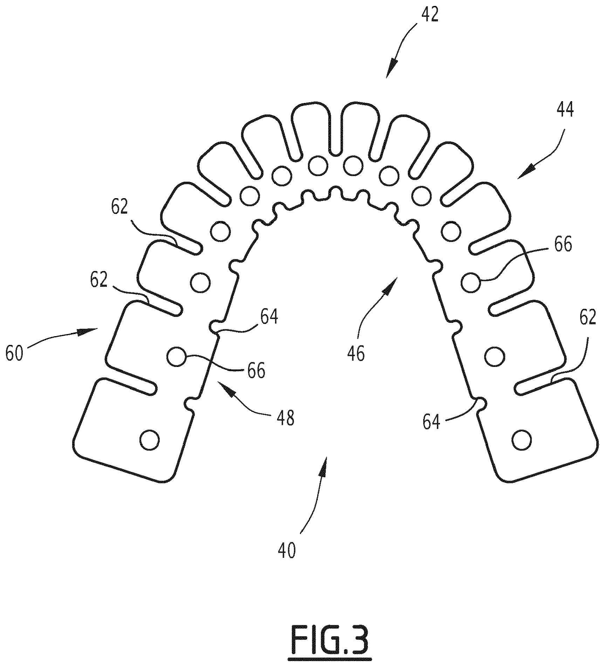

La figure 3 montre une deuxième image numérisée 40 en trois dimensions. La deuxième image 40 représente un dispositif de pose 42, destiné spécifiquement à la pose de l'appareil orthodontique 12 précédemment décrit.

Le dispositif de pose 42 comprend : une première face, dite face avant 44, orientée vers la rangée 14 de dents ; et une deuxième face dite face arrière 46, opposée à ladite rangée de dents. Dans le mode de réalisation représenté, le dispositif de pose 42 comprend en outre un moyen d'assemblage 48, disposé à la fois sur la face avant 44 et sur la face arrière.

Dans le mode de réalisation représenté, correspondant à un appareil orthodontique 12 lingual, la face avant 44 présente une forme générale courbe convexe. Au contraire, la face arrière 46 présente une forme générale courbe concave, apte à contourner la langue du patient.

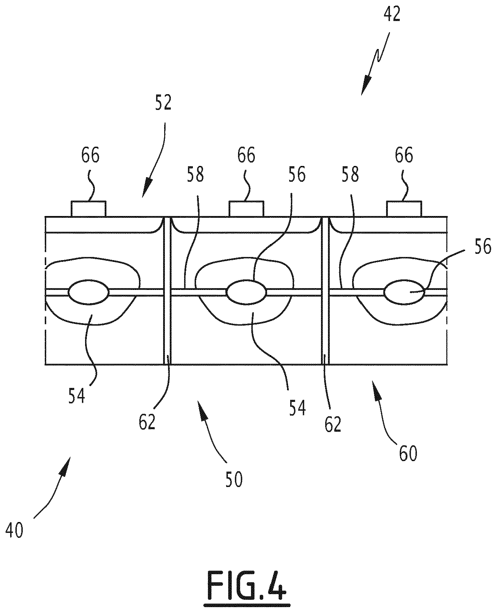

La face avant 44, dont un détail est visible sur la figure 4, comporte notamment une surface de contact 50 et une surface d'insertion 52.

La surface de contact 50 est configurée pour s'assembler de manière complémentaire à la surface de réception 20 de la rangée 14 de dents. La surface de contact 50 est préférentiellement discontinue. En particulier, dans le mode de réalisation visible sur la figure 4, la surface de contact 50 comporte une pluralité de zones de contact 54 espacées les unes des autres. Chaque zone de contact 54 présente une forme sensiblement annulaire et correspond à la surface d'une dent 16, 18 distincte, autour de la zone de réception 34 d'un élément d'attache 22 de l'appareil orthodontique 12.

La surface d'insertion 52 est configurée pour s'assembler à l'appareil orthodontique 12. La surface d'insertion 52 comporte une pluralité de premières 56 et de secondes 58 cavités, correspondant respectivement aux éléments d'attache 22 et aux ponts 24.

Chaque première cavité 56 est entourée d'une zone de contact 34 annulaire. Chaque première cavité 56 présente une forme complémentaire de la surface frontale 32 de l'élément d'attache 22 correspondant. De préférence, la première cavité 56 a une forme concave, lisse et recourbée, complémentaire de la forme bombée de la surface frontale 32 correspondante.

Chaque seconde cavité 58 a la forme d'une rainure débouchant de part et d'autre sur deux premières cavités 56 adjacentes. Chaque seconde cavité 58 présente des dimensions suffisantes pour recevoir un pont 24 de l'appareil orthodontique, ledit pont reliant les éléments d'attache 22 correspondant auxdites deux premières cavités 56 adjacentes.

Le moyen d'assemblage 48 comprend une pluralité d'unités d'assemblage 60. Chaque unité d'assemblage 60 est disposée proche de l'une des premières cavités 56.

Dans le mode de réalisation représenté, chaque unité d'assemblage 60 comporte deux rainures avant 62, deux rainures arrière 64 et un pion 66.

Les deux rainures avant 62 sont disposées sur la face avant 44, de part et d'autre de la première cavité 56 correspondant à l'unité d'assemblage 60. Chaque seconde cavité 58 de la face avant est traversée par une rainure avant 62.

Les rainures arrière 64 sont disposées sur la face arrière 46, sensiblement en vis-à-vis des rainures avant. Le pion 66 est également disposé sur la face arrière 46.

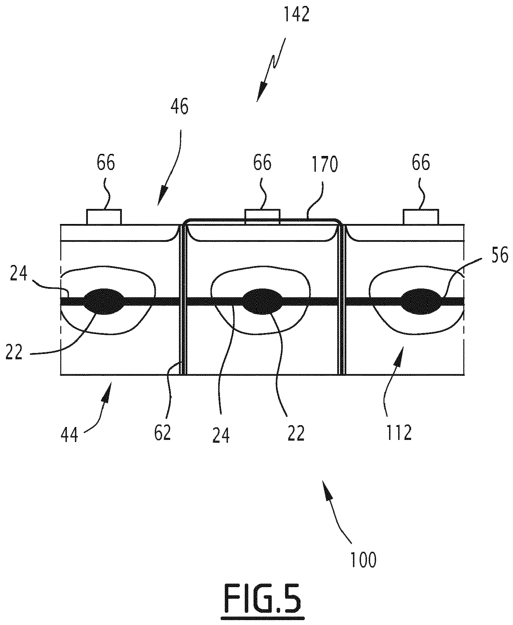

La figure 5 représente un assemblage de pose 100 comprenant un appareil orthodontique 112, un dispositif de pose 142 et une pluralité d'organes de maintien 170. Pour simplifier, un seul organe de maintien 170 est représenté.

L'appareil orthodontique 112 de la figure 5 correspond à la réalisation, à partir d'un ou de plusieurs matériaux solides, de l'appareil orthodontique 12 défini dans la première image numérisée 10 précédemment décrite. La description ci-dessus de l'appareil orthodontique 12 s'applique à l'appareil orthodontique 112 avec les mêmes numéros de référence.

Le ou les matériaux solides formant l'appareil orthodontique 112 sont par exemple du métal, de la céramique ou de la résine. Selon un mode de réalisation préférentiel, l'appareil orthodontique 112 est réalisé dans un matériau à mémoire de forme, tel que du nitinol. Un tel appareil orthodontique est décrit dans la demande FR3089114 au nom de la Demanderesse.

Le dispositif de pose 142 de la figure 5 correspond à la réalisation, à partir d'un ou de plusieurs matériaux solides, du dispositif de pose 42 défini dans la deuxième image numérisée 40 précédemment décrite. La description ci-dessus du dispositif de pose 42 s'applique au dispositif de pose 142 avec les mêmes numéros de référence.

Le ou les matériaux solides formant le dispositif de pose 142 sont adaptés à la fabrication par impression 3D ou fabrication additive. Ces matériaux sont par exemple du métal, de la céramique ou de la résine.

Chaque organe de maintien 170 est destiné à maintenir un élément d'attache 22 de l'appareil orthodontique 112 dans la première cavité 56 correspondante du dispositif de pose 142.

Dans une configuration assemblée, telle que représentée sur la figure 1, chaque organe de maintien 170 est assemblé au moyen d'assemblage 48 du dispositif de pose 142 afin de maintenir l'élément d'attache 22 dans la première cavité 56 correspondante.

Dans le mode de réalisation représenté, chaque organe de maintien 170 est un élastique passant dans les rainures avant 62, ainsi que dans les rainures arrière 64 et/ou autour du pion 66. En variante non représentée, l'organe de maintien 170 est également choisi parmi un fil de fer, un fil soluble ou encore un autre type d'attache.

En passant dans une rainure avant 62, l'élastique 170 bloque le pont 24 reçu dans la seconde cavité 58 traversée par ladite rainure avant. Chaque élément d'attache 22 adjacent audit pont 24 est ainsi maintenu dans la première cavité 56 correspondante.

En variante non représentée, l'organe de maintien est par exemple une clavette qui coulisse dans des rainures de l'unité d'assemblage.

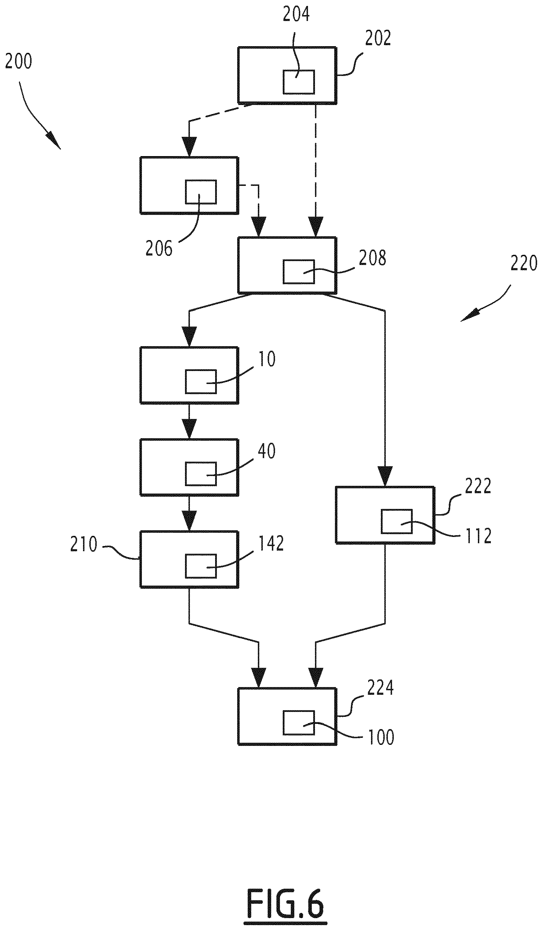

Un procédé 200 de fabrication du dispositif de pose 142 de la figure 5 va maintenant être décrit, à l'appui de la figure 6.

Dans une première étape 202, une rangée de dents d'un patient à traiter est modélisée en scannant la mâchoire dudit patient. Une image numérisée 204 de la rangée de dents est obtenue. Ladite image numérisée 204 correspond à la rangée 14 de dents de l'image numérisée 10 précédemment décrite.

Cette image numérisée 204 correspond aux dents du patient dans une première position, dite position initiale.

Dans un premier cas, l'appareil orthodontique 12, 112 visé est un appareil dit actif, ayant pour but de corriger la position des dents du patient. Dans ce cas, à partir de l'image numérisée 204 des dents en position initiale, une image modifiée 206 est élaborée à l'aide d'un logiciel approprié. Cette image modifiée 206, ou setup, correspond à une deuxième position souhaitée des dents du patient.

Dans un second cas, l'appareil orthodontique 12, 112 visé est un appareil dit inactif ou de contention, qui a pour but de maintenir les dents du patient dans la première position. Dans ce cas, on ne réalise pas d'image modifiée des dents.

Ensuite, à l'aide d'un logiciel approprié, une image numérisée 208 d'un appareil orthodontique est réalisée à partir de l'image numérisée 204 des dents en position initiale, et éventuellement du setup 206. Cette image numérisée 208 comprend notamment la forme et les dimensions de l'appareil orthodontique adapté aux dents du patient et à l'éventuelle correction souhaitée.

Ensuite, l'image numérisée 208 obtenue est modifiée et superposée à l'image numérisée 204 des dents en position initiale. En particulier, la forme de l'appareil orthodontique de l'image 208 est éventuellement modifiée pour s'adapter à la position initiale des dents du patient, dans le cas d'un appareil actif.

On obtient alors l'image numérisée 10 précédemment décrite, avec l'appareil orthodontique 12 assemblé à la rangée 14 de dents.

Ensuite, à partir de l'image numérisée 10, l'image numérisée 40 du dispositif de pose 42 est conçue de la manière précédemment décrite. En particulier, la face avant 44 du dispositif de pose 42 comporte des parties de forme complémentaire à la surface de réception 20 des dents et à la forme de l'appareil orthodontique 12.

Ensuite, dans une étape de fabrication 210, l'image numérisée 40 est transférée dans une imprimante 3D et le dispositif de pose 142 est réalisé par fabrication additive, au moyen de ladite imprimante 3D.

Un procédé 220 de fabrication de l'assemblage de pose 100 de la figure 5 va également être décrit à l'appui de la figure 6.

Dans une étape de fabrication 222, en parallèle à la fabrication décrite ci-dessus du dispositif de pose 142, l'appareil orthodontique 112 de la figure 5 est fabriqué à partir de son image numérisée 208. Par exemple, ladite image numérisée 208 est transférée dans une imprimante 3D et l'appareil orthodontique 112 est réalisé de manière monobloc, par fabrication additive, au moyen de ladite imprimante 3D. L'appareil orthodontique 112 est par exemple réalisé dans un matériau à mémoire de forme tel que du nitinol.

En variante, l'appareil orthodontique 112 peut être réalisé par toute méthode connue, par exemple l'assemblage de brackets ou de perles, formant les éléments d'attache 22, avec un arc orthodontique formant les ponts 24.

De préférence, quelle que soit la méthode utilisée pour fabriquer l'appareil orthodontique 112, les surface d'attache 30 des éléments d'attache 22 sont préférentiellement réalisées par impression 3D pour être parfaitement complémentaires des zones de réception 34 décrites ci-dessus.

Ensuite, dans une étape d'assemblage 224, l'appareil orthodontique 112 est disposé dans les premières 56 et secondes 58 cavités de la face avant 44 du dispositif de pose 142. Des organes de maintien 170, tels que des élastiques, sont assemblés aux unités d'assemblage 60 du dispositif de pose 142 pour maintenir en place l'appareil orthodontique 112 comme décrit ci-dessus.

L'assemblage de pose 100 en configuration assemblée est ainsi obtenu.

Un procédé de mise en œuvre de l'assemblage de pose 100 dans la bouche d'un patient va maintenant être décrit.

Tout d'abord, l'assemblage de pose 100 étant en configuration assemblée, un adhésif fluide de type résine est appliqué sur les surfaces d'attache 30 des éléments d'attache 22 de l'appareil orthodontique 112. En variante, l'adhésif fluide est appliqué sur les dents du patient.

Ensuite, l'assemblage de pose 100 est introduit dans la bouche du patient de manière à plaquer la face avant 44 du dispositif de pose 142 sur la surface correspondante des dents du patient. Suite à leur conception sur la base des images numérisées 10 et 40 décrites ci-dessus, le dispositif de pose 142 et l'appareil orthodontique 112 épousent parfaitement les dents du patient, au niveau correspondant à la surface de réception 20 précédemment décrite.

L'assemblage de pose 100 est laissé en place durant une période de durcissement de l'adhésif. Les surface d'attache 30 des éléments d'attache 22 sont précisément positionnées par l'assemblage de pose 100 pour que lesdits éléments d'attache de l'appareil orthodontique 112 se fixent précisément aux endroits appropriés sur les dents.

Eventuellement, l'assemblage de pose 100 et les dents du patient sont exposés à un rayonnement de type UV pour favoriser le durcissement de l'adhésif.

Après durcissement de l'adhésif, les élastiques 170 sont ôtés ou coupés et le dispositif de pose 142 est retiré de la bouche du patient. L'appareil orthodontique 112 est maintenu en place par l'adhésif, à son emplacement souhaité sur les dents du patient.

L'assemblage de pose 100 selon l'invention permet ainsi de mettre en place facilement un appareil orthodontique 112 dans la bouche d'un patient, avec une grande précision de pose des éléments d'attache 22.

L'invention est compatible avec tout type d'appareil orthodontique, actif ou de contention, ainsi qu'avec toute méthode de fabrication dudit appareil orthodontique à partir d'une image numérisée.

## Revendications

1. Procédé de fabrication d'un dispositif (42, 142) de pose d'un appareil orthodontique (12, 112), comprenant les étapes suivantes :
- réalisation d'une première image numérisée (204) d'une rangée (14) de dents (16, 18) d'un patient dans une première position initiale, ladite rangée de dents comprenant une surface de réception (20) ; puis
- réalisation, à partir de ladite première image, d'une deuxième image numérisée (208) de l'appareil orthodontique ;
ledit appareil orthodontique comprenant au moins deux éléments d'attache (22) et au moins un pont (24), le ou chaque pont reliant deux éléments d'attache,
chaque élément d'attache comprenant une surface d'attache (30) et une surface frontale (32) opposées, chaque surface d'attache étant apte à être assemblée à une zone de réception (34) incluse dans la surface de réception (20), chaque zone de réception correspondant à une dent (16, 18) distincte de la rangée ;
le procédé étant **caractérisé en ce qu'**il comporte en outre les étapes suivantes :
- réalisation, à partir des première et deuxième images numérisées, d'une troisième image numérisée (10) de l'appareil orthodontique assemblé à la rangée de dents dans la première position initiale, chaque surface d'attache (30) d'un élément d'attache (22) étant assemblée à la zone de réception (34) correspondante de la surface de réception (20) ; puis
- réalisation, à partir de la troisième image numérisée, d'une quatrième image numérisée (40) d'un dispositif (42) de pose de l'appareil orthodontique, ledit dispositif de pose comprenant : une surface de contact (50), apte à s'assembler de manière complémentaire à la surface de réception (20) de la rangée de dents ; au moins deux premières cavités (56) débouchant sur la surface de contact, chaque première cavité étant complémentaire d'une surface frontale (32) d'un élément d'attache de l'appareil orthodontique ; et au moins une seconde cavité (58), la ou chaque seconde cavité étant apte à recevoir un pont (24) de l'appareil orthodontique ; puis
- fabrication additive du dispositif de pose (142) à partir de ladite quatrième image numérisée, à l'aide d'un matériau solide.

2. Procédé de fabrication selon la revendication 1, comprenant en outre une étape de réalisation d'une cinquième image numérisée (206) de la rangée de dents du patient dans une deuxième position recherchée ; la réalisation de la deuxième image numérisée (208) de l'appareil orthodontique étant effectuée à partir des première (204) et cinquième (206) images numérisées, de sorte que l'appareil orthodontique soit apte à déplacer les dents du patient de la première à la deuxième position.

3. Procédé de fabrication selon la revendication 1 ou la revendication 2 ; dans lequel la quatrième image numérisée (40) du dispositif de pose est configurée de sorte que ledit dispositif de pose comprenne une pluralité d'unités d'assemblage (60), chaque unité d'assemblage étant disposée proche d'une première cavité (56), chaque unité d'assemblage étant destinée à s'assembler avec un organe (170) de maintien de l'élément d'attache correspondant dans ladite première cavité.

4. Dispositif (142) de pose d'appareil orthodontique, issu d'un procédé selon l'une des revendications 1 à 3.

5. Procédé de fabrication d'un assemblage de pose (100), ledit assemblage de pose comprenant un appareil orthodontique (112) et un dispositif de pose (142) assemblés l'un à l'autre de manière réversible,
le procédé comprenant les étapes suivantes : fabrication du dispositif de pose (142) par un procédé selon l'une des revendications 1 à 3 ; fabrication de l'appareil orthodontique (112) à partir de la deuxième image numérisée (208) ; et assemblage dudit appareil orthodontique (112) au dispositif de pose (142), la surface frontale (32) de chaque élément d'attache étant reçue dans la première cavité (56) correspondante, chaque pont (24) étant reçu dans la seconde cavité (58) correspondante.

6. Procédé de fabrication d'un assemblage de pose selon la revendication 5 prise en combinaison avec la revendication 3, comprenant en outre l'assemblage d'un organe de maintien (170) avec chaque unité d'assemblage (60) du dispositif de pose (142), ledit organe de maintien étant apte à maintenir un élément d'attache (22) de l'appareil orthodontique dans la première cavité (56) correspondante du dispositif de pose (142).

7. Assemblage (100) de pose d'appareil orthodontique (112), issu d'un procédé selon l'une des revendications 5 ou 6.

8. Assemblage de pose selon la revendication 7, dans lequel l'appareil orthodontique (112) est un appareil de type lingual, destiné à être appliqué à l'arrière des dents d'un patient.

9. Assemblage de pose selon la revendication 7 ou la revendication 8, dans lequel l'appareil orthodontique (112) est réalisé dans un matériau à mémoire de forme, préférentiellement du nitinol.
